# FASCICULE DE BREVET EUROPEEN

(11) **EP 1 187 289 B1**
(45) Date de publication et mention de la délivrance du brevet: **02.08.2006**
(21) Numéro de dépôt: 01490032.8
(22) Date de dépôt: 31.08.2001
(51) Int. Cl.: H02H 7/085

(54) **Dispositif de contrôle du fonctionnement d'un moteur électrique alimenté en alternatif**
Vorrichtung zur Steuerung eines wechselstromgespeisten Elektromotors
Control device for an electric motor powered by ac

(30) Priorité: 31.08.2000 FR 0011105
(43) Date de publication de la demande: 13.03.2002
(73) Titulaire: Jouvence, sarl, 62136 Lestrem (FR)
(72) Inventeur: Stempniakowski, Tony, 62840 Laventie (FR)
(74) Mandataire: Hennion, Jean-Claude

(56) Documents cités:
- EP-A- 0 999 632
- DE-A- 4 440 449

## Description

L'invention se rapporte à un dispositif de contrôle du fonctionnement d'un moteur électrique alimenté en alternatif.

Notamment lorsque les moteurs électriques sont utilisés pour entraîner en translation un objet tel une porte ou un volet entre deux positions extrêmes, il est nécessaire de stopper l'alimentation du moteur lorsque l'objet a atteint l'une ou l'autre de ces deux positions extrêmes afin d'éviter un échauffement du moteur, voire sa destruction.

L'arrêt du moteur peut être déclenché par l'intermédiaire d'un organe de détection qui, placé sur la trajectoire de l'objet, agit comme un interrupteur.

Ce principe, toujours utilisé, présente des inconvénients notamment en ce qui concerne la nécessité d'implanter ces interrupteurs et de les relier à la carte de commande du moteur.

Pour éviter cela, il est connu (US-5.151.638) de surveiller la variation de phase entre le courant et la tension qui circule dans le bobinage du moteur pour détecter une surcharge du moteur et induire un arrêt de l'alimentation.

En effet, lorsque le moteur entraîne une charge, il existe une différence de phase entre le courant et la tension qui circule dans le bobinage du moteur.

Cette différence de phase peut être considérée comme une image instantanée du couple du moteur.

Lorsque l'on constate que cette différence de phase se modifie rapidement par rapport à une valeur habituelle dite valeur de consigne, cela signifie qu'un événement se produit et notamment une augmentation de couple induite par un arrêt en translation de l'objet.

Cela peut se produire lorsque l'objet, tel le volet roulant, a atteint la butée extrême ou que cet objet a rencontré un obstacle imprévu sur sa trajectoire.

Pour réaliser cette surveillance, sur l'un des deux conducteurs d'alimentation de la bobine du moteur, on place un tore ferromagnétique sur lequel on constitue avec ce conducteur une bobine primaire.

Sur ce tore ferromagnétique, on constitue un bobinage secondaire permettant d'extraire une image du courant traversant le conducteur pour en détecter la phase.

Sur l'autre conducteur d'alimentation, on prélève la tension pour ensuite comparer la différence de phase entre les deux signaux courant et tension et ainsi commander l'arrêt du moteur suivant une consigne.

Sur la base de ce principe, différents montages ont été réalisés.

Pour déplacer l'objet dans un sens ou dans l'autre, on utilise des moteurs à double bobinage.

Un tel moteur comprend deux bobines reliées par une de leurs deux extrémités, à un commun relié lui même à l'un des deux conducteurs de l'alimentation du moteur.

Les deux autres extrémités des bobines dites bornes connectables sont reliées électriquement par un condensateur.

Selon le sens de rotation choisi, on connecte l'une ou l'autre de ces bornes connectables au deuxième conducteur d'alimentation.

Sur ces moteurs, le condensateur est logé dans l'enveloppe du moteur.

Les conducteurs d'alimentation du moteur sont alors seuls accessibles sans démontage.

Pour ce type de moteur, on connaît un montage (DE-A-4.440.449) qui, pour le contrôle de la surcharge du moteur, prélève la tension sur l'une des bornes connectables et le courant sur l'autre borne connectable.

La mesure, qu'il s'agisse du courant ou de la tension, se fait toujours sur le courant circulant au travers des deux bobines alors que seule l'une des deux bobines est réellement active pour produire la rotation du moteur.

La mesure est donc dépendante de la bobine active et de la bobine inactive.

On connaît un autre montage comprenant toujours deux bobines reliées par un commun.

La tension est prélevée sur ce commun.

Pour éviter l'influence de la deuxième bobine dite inactive sur la mesure, le courant est prélevé en un point situé entre l'extrémité de la bobine active et le condensateur.

Pour réaliser cette opération, il faut, d'une part, déporter le condensateur et, d'autre part, connecter le moyen de prélèvement de la tension sur celle des bornes connectables effectivement utilisées.

Le condensateur est donc monté sur la carte électronique de commande sur une partie du circuit qui, selon le choix de rotation du moteur, est connecté à l'une ou l'autre des bornes connectables.

Cela complique le circuit de connexion.

Pour réaliser cela, il faut en outre faire appel à des relais mécaniques qui effectuent la connexion choisie.

Des problèmes de longévité de ces relais peuvent apparaître.

Par ailleurs, des moteurs disposant d'une connexion pour un montage du condensateur à l'extérieur du moteur n'étant pas disponibles sur le marché, il faut fabriquer des moteurs spéciaux.

L'invention propose une solution de montage faisant appel notamment à des moteurs standards, c'est à dire des moteurs équipés de leur condensateur logé à l'intérieur du moteur.

Certes, on connaît par le document EP-A-0.999.632, un dispositif de contrôle du fonctionnement d'un moteur électrique constitué de deux bobines reliées, par une de leurs deux extrémités, à un commun relié lui même à l'un des deux conducteurs de l'alimentation du moteur, avec les deux autres extrémités des bobines dites bornes connectables étant reliées électriquement par un condensateur et étant reliées au deuxième conducteur au travers d'un jeu d'interrupteurs électroniques sélectionnant la connexion, ce dispositif de contrôle comprenant :
- un dispositif de connexion du deuxième conducteur d'alimentation à l'une ou l'autre des deux bornes connectables précitées selon le sens de rotation choisi :

- un moyen pour prélever un premier paramètre, étant la tension,
- un moyen pour prélever un second paramètre,
- un moyen pour mesurer le déphasage entre les deux paramètres et
- un moyen pour comparer le déphasage mesuré avec une valeur de consigne

Cependant, il subsiste avec ce dispositif un problème qui est de détecter un surcouple par mesure du déphasage sans nécessiter de déporter le condensateur.

Selon la présente invention, le problème est résolu par un dispositif caractérisé en ce que :
le second paramètre est le courant de la bobine active,
- le courant est prélevé en un point situé entre le jeu d'interrupteurs et un moyen électrique connecté à la masse.

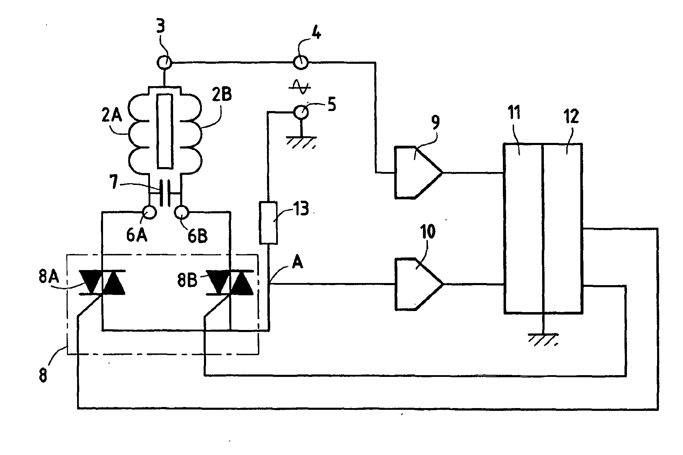

L'invention sera bien comprise à l'aide de la description ci-après faite à titre d'exemple non limitatif au regard du dessin ci-annexé qui représente un schéma du dispositif de contrôle.

En se reportant au dessin, on voit que pour déplacer un objet, tel un volet roulant, entre deux positions extrêmes, on fait appel à un moteur 1 électrique.

Dans le cas du déplacement du tablier du volet roulant, ce moteur électrique est calé en rotation sur l'arbre sur lequel s'enroule ledit tablier.

Ce moteur est alimenté en courant alternatif.

Pour que le moteur fonctionne dans les deux sens, il est constitué de deux bobines 2A,2B reliées, par une de leurs deux extrémités, à un commun 3 relié lui même à l'un 4 des deux conducteurs 4,5 de l'alimentation du moteur, avec les deux autres extrémités 6A,6B des bobines dites bornes connectables étant reliées électriquement par un condensateur 7.

Le dispositif de contrôle comprend en outre un dispositif 8 de connexion du deuxième conducteur d'alimentation à l'une ou l'autre des deux bornes 6A,6B connectables précitées selon le sens de rotation choisi.

Le condensateur 7 est classiquement logé dans le moteur.

Lorsque l'on souhaite faire tourner le moteur dans un sens, on alimente l'une des deux bobines qui, selon son sens d'enroulement, fait alors tourner le rotor du moteur dans le sens souhaité.

La deuxième bobine se trouve alors déconnectée.

Le dispositif de contrôle de ce moteur comprend :
- un moyen 9 pour prélever la tension,
- un moyen 10 pour prélever le courant,
- un moyen 11 pour mesurer le déphasage entre la tension et le courant et
- un moyen 12 pour comparer le déphasage mesuré avec une valeur de consigne.

Le dispositif de contrôle a pour fonction de détecter un surcouple par mesure du déphasage afin de couper l'alimentation.

Selon une caractéristique :
- le moyen 9 de prélèvement de la tension est monté sur le commun 3 aux deux bobines,
- les bornes 6A,6B connectables sont reliées au deuxième conducteur au travers d'un jeu 8 d'interrupteurs électroniques sélectionnant la connexion et d'un moyen électrique 13 pour faire apparaître le décalage tension/courant au niveau duquel est prélevé le courant en un point A situé entre le moyen électrique 13 et le jeu d'interrupteurs.

Ce moyen électrique 13 est une faible résistance.

On prélève donc le courant de la bobine active, mais sans toutefois écarter l'influence du condensateur.

Celui 5 des deux conducteurs d'alimentation relié à l'une ou l'autre des bornes connectables est considéré comme une masse pour le circuit électronique de mesure et de commande et la résistance très faible de l'ordre de 0,2 Ohm, permet de décaler le point de prise de la mesure du courant du point de masse.

Cette solution permet d'utiliser tous les types de moteurs existant sans nécessité de déporter le condensateur.

Egalement, on utilise un simple jeu d'interrupteurs électroniques tels des triacs 8A,8B qui ne posent pas de problème de contacts.

## Revendications

1. Dispositif de contrôle du fonctionnement d'un moteur électrique alimenté en alternatif constitué de deux bobines (2A,2B) reliées, par une de leurs deux extrémités, à un commun (3) relié lui même à l'un (4) des deux conducteurs (4,5) de l'alimentation du moteur, avec les deux autres extrémités (6A,6B) des bobines dites bornes connectables étant reliées électriquement par un condensateur (7) et étant reliées au deuxième conducteur au travers d'un jeu (8) d'interrupteurs électroniques sélectionnant la connexion,
ce dispositif de contrôle comprenant un dispositif (8) de connexion du deuxième conducteur d'alimentation à l'une ou l'autre des deux bornes (6A,6B) connectables précitées selon le sens de rotation choisi et comprenant :
- un moyen (9) pour prélever un premier paramètre, étant la tension,
- un moyen (10) pour prélever un second paramètre,
- un moyen (11) pour mesurer le déphasage entre les deux paramètres et
- un moyen (12) pour comparer le déphasage mesuré avec une consigne,
ce dispositif est **caractérisé en ce que** :
- le second paramètre est le courant de la bobine active,
- et **en ce que** le courant est prélevé en un point (A) situé entre le jeu d'interrupteurs et un moyen électrique (13) connecté à la masse (5).

2. Dispositif de contrôle du fonctionnement d'un moteur électrique alimenté en alternatif selon la revendication 1 **caractérisé en ce que** le moyen électrique (13) est une résistance faible.

3. Dispositif de contrôle du fonctionnement d'un moteur électrique alimenté en alternatif selon l'une des revendications 1 ou 2, **caractérisé en ce que** le moyen (9) de prélèvement de la tension est monté sur le commun (3) aux deux bobines.

## Claims

1. A device for controlling the operation of an AC powered electric motor consisting of two coils (2A, 2B) connected, through one of their two ends, to a common wire (3) itself connected to one (4) of the two conductors (4, 5) of the power supply of the motor, with both other ends (6A, 6B) of the coils, so-called connectible terminals, being electrically connected through a capacitor (7) and being connected to the second conductor through a set (8) of electronic switches selecting the connection,
this control device comprises a device (8) for connecting the second power supply conductor to either of both aforementioned connectible terminals (6A, 6B) according to the selected direction of rotation and comprising:
- a means (9) for sampling a first parameter which is voltage,
- a means (10) for sampling a second parameter,
- a means (11) for measuring the phase lag between both parameters, and
- a means (12) for comparing the measured phase lag with a set value, this device being **characterized in that**:
- the second parameter is the current of the active coil, and **in that** the current is sampled at a point (A) located between the set of switches and an electrical means (13) connected to the ground (5).

2. The device for controlling the operation of an AC powered electric motor according to claim 1, **characterized in that** the electric means (13) is a low value resistor.

3. The device for controlling the operation of an AC powered electric motor according to any of claims 1 or 2,
**characterized in that** the means (9) for sampling the voltage is mounted on the common wire (3) to both coils.

## Patentansprüche

1. Vorrichtung zur Steuerung eines wechselstromgespeisten Elektromotors bestehend aus zwei Spulen (2A, 2B), die an einem ihrer Enden mit einem gemeinsamen Element (3) verbunden sind, das selber mit einem (4) von zwei stromleitenden Elementen (4, 5) der Motorversorgung verbunden ist, wobei die beiden anderen Enden (6A, 6B) der Spulen, die als anschließbare Klemmen bezeichnet werden, durch einen Kondensator (7) elektrisch verbunden sind und mit dem zweiten Kondensator durch einen Satz von elektronischen Schaltern, die den Anschluß auswählen, verbunden sind,
wobei diese Steuerungsvorrichtung eine Vorrichtung (8) zum Anschluß des zweiten stromleitenden Elements der Versorgung mit der einen oder der anderen vorgenannten anschließbaren Klemme je nach der ausgewählten Drehrichtung aufweist und umfaßt:
- ein Mittel (9) zur Entnahme eines ersten Parameters, wobei dieser Parameter die Spannung ist,
- ein Mittel (10) zur Entnahme eines zweiten Parameters,
- ein Mittel (11) zur Messung der Phasenverschiebung zwischen den beiden Parametern und
- ein Mittel (11) zum Vergleichen der gemessenen Phasenverschiebung mit einem Sollwert,
wobei diese Vorrichtung **dadurch gekennzeichnet ist, daß**:
- der zweite Parameter der Strom der aktiven Spule ist und daß
- der Strom an einem Punkt (A) entnommen wird, der zwischen dem Satz von Schaltern und einem elektrischen Mittel (13), der mit der Masse angeschlossen ist, liegt.

2. Vorrichtung zur Steuerung eines wechselstromgespeisten Elektromotors nach Anspruch 1, **dadurch gekennzeichnet, daß** das elektrische Mittel (13) ein schwacher Widerstand ist.

3. Vorrichtung zur Steuerung eines wechselstromgespeisten Elektromotors nach einem der Ansprüche 1 oder 2, **dadurch gekennzeichnet, daß** das Spannungsentnahmemittel (9) an dem gemeinsamen Element (3) der beiden Spulen montiert ist.
